# EUROPEAN PATENT SPECIFICATION

(11) **EP 0 408 271 B1**
(45) Date of publication and mention of the grant of the patent: **01.05.1996**
(21) Application number: 90307446.6
(22) Date of filing: 09.07.1990
(51) Int. Cl.: G11B 7/24

(54) **Optical memory medium**
Optisches Speichermedium
Milieu de mémorisation optique

(30) Priority: 10.07.1989 JP 177462/89
(43) Date of publication of application: 16.01.1991
(73) Proprietor: SANYO ELECTRIC CO., LTD., Moriguchi-shi, Osaka (JP)
(72) Inventor: Kitamura, Hiroshi, Nirakata City, Osaka 573 (JP); Tatezono, Fumio, Hirakata City, Osaka 573 (JP); Kishimoto, Daisuke, Ono-shi Hyogo-ken 675-13 (JP); Kume, Minoru, Nara-ken 631 (JP); Matsuura, Kotaro, Tsuzuki-gun, Kyoto 610-03 (JP)
(74) Representative: Read, Matthew Charles

(56) References cited:
- EP-A- 0 083 991
- EP-A- 0 143 992
- US-A- 4 636 804
- US-A- 4 891 800
- PATENT ABSTRACTS OF JAPAN, vol. 9, no. 249 (M-419)[1972], 5th October 1985; & JP-A-60 99 697
- PATENT ABSTRACTS OF JAPAN, vol. 10, no. 202 (P-477)[2258], 15th July 1986; & JP-A-61 45 437

## Description

The present invention relates to an optical memory medium.

Recently, research has been carried out on various types of optical memory media, for example, for compact discs. Such optical memory media make it possible to record information at a density of the order of microns, resulting in an extremely high storage capacity. Information reproduction is performed by applying a laser beam to the media without any contact therewith, so that the media does not wear.

In the case of a compact disc, cavities referred to as pits are provided on a recording layer, and information is recorded by making a reflectance of a pit portion lower than that of other portion which is not formed with pits, by utilising interference of light. Similarly, in the majority of other media being studied, information is recorded by making a reflectance of a recording portion lower than that of other portions.

In such memory media, the reflectance of the recording portion varies with time, so that the reflectance difference between the recording portion and the other portions reduces with time, resulting in degraded reproduction. It is known that such a reflectance variation with time is caused by oxidation of the recording layer, the oxidation being caused by natural light or the like. As recently reported in NIKKEI ELECTRONICS on page 107, January 23, 1989, in the case of using an organic dyestuff material for a recording layer the organic dyestuff material is liable to be oxidised by natural light, with the result that the reliability of the memory medium is considerably lowered.

JP-A-61-45437 discloses an optical recording medium having an inorganic recording layer under a transparent layer. The recording layer is protected protected against optically induced oxidation by a colouring agent in the transparent layer. The colouring agent blocks light having a wavelength in the region of 500∼800nm. However, such an arrangement is unsatisfactory when an organic dyestuff recording layer is used.

To overcome the above problem, a method for inhibiting oxidation of a dyestuff material layer by adding a quencher (antioxidant) thereto, is disclosed in a transaction on page 1885 of Nippon Kagakkai Spring Meeting, 1989. According to this method, however, adding a quencher to the recording layer degrades characteristics of the recording layer itself. Therefore, this method cannot sufficiently improve the memory medium.

The present invention is accomplished in view of the above problem. Accordingly, the invention provides an optical memory medium for recording or reproducing information by applying a laser beam thereto, comprising: a substrate; an organic photochromic recording layer on the substrate; a reflective layer formed on the recording layer; and light-absorptive material associated with the substrate for protecting the recording layer, wherein the light-absorptive material comprises a combination of two organic dyes and has a peak in its transmissivity characteristic at a wavelength suitable for recording on and reproduction from the recording layer.

Hereinafter, the invention will be more fully understood from the following description in which the preferred embodiments are set forth in detail in conjunction with the accompanying drawings, wherein:

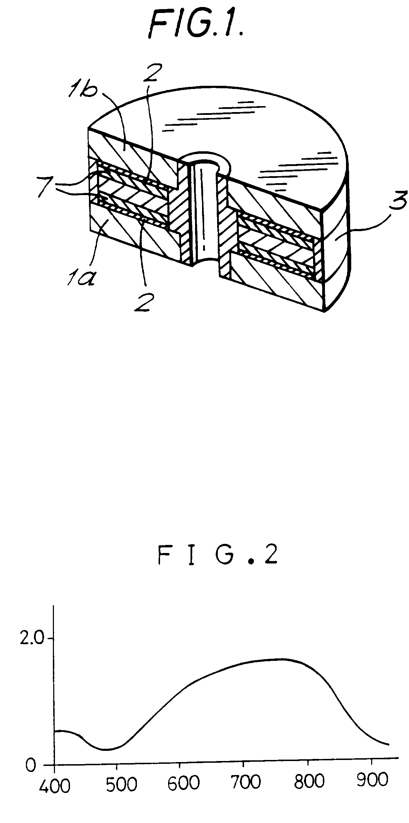

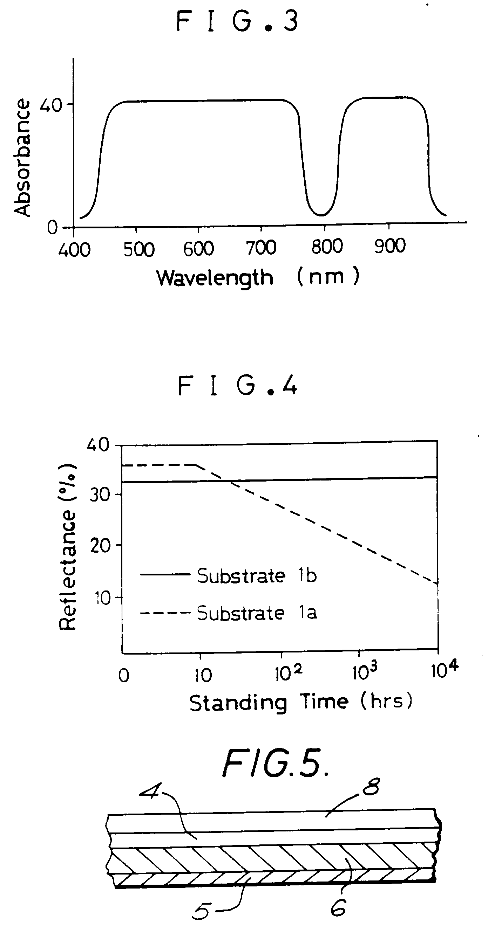

Figure 1 is a sectional view of an optical memory disc of one embodiment according to the invention; Figure 2 is a graph showing an absorbance of a material used for a recording layer of the embodiment; Figure 3 is a graph showing absorbances of respective materials incorporated in a substrate of the embodiment; Figure 4 is a graph showing a result of an experiment with respect to the embodiment; and Figure 5 is a sectional view of an optical memory disc of another embodiment according to the invention.

The shading means is formed of a layer or substrate containing such a material as to absorb light of any undesired wavelengths for recording and/or reproducing information, and provided at least before a beam-incident surface of the recording layer when viewed from the light source.

Specifically, the memory medium according to the invention is constructed in the following manner:
(A) A recording layer is formed on one side of each of the two substrates, an aluminium reflecting layer is formed over each recording layer, and then the two substrates are disposed opposite each other, so that the reflecting layers face each other, and separated by a spacer; in this case, (I) the above light-absorptive material is incorporated in one of the substrates, (II) a layer containing the above light-absorptive material is formed on the other side of the two substrates, or (III) the above layer may be formed on the other side of both substrates; or
(B) The above layer containing the light-absorptive material is formed on one side of a substrate, then a recording layer is formed thereover; or by using the above medium as a construction unit, two contruction units are disposed opposed to each other so that the recording layers thereof may face each other.

Materials, thicknesses, sizes and the like of a substrate, the recording layer and a spacer can be appropriately selected from those known in the art. Among them, examples of a recording layer material for a WORM (Write Once Read Many) type optical disc are cyanine-type dyestuffs (particularly, indolenine-type cyanine dyestuffs, tetraphenylmethylene-type cyanine dyestuffs and the like), phthalocyanine-type dyestuffs, naphthoquinone-type dyestuffs, pyrylium-type dyestuffs, croconium-type dyestuffs and the like. Examples of a recording layer material for a re-writable type optical memory are organic photochromic compounds [particularly, 2,3-di(2,3,5-trimethylthienyl) maleic acid anhydride] and the like. Among the above materials, known materials may be used.

The light-absorptive material for absorbing light of undesired wavelengths is meant here by a material which does not substantially absorb light of absorption peak of a selected material (dyestuff) for the recording layer. In other words, the light-absorptive material for absorbing light of undesired wavelengths is different from the selected material for the recording layer in absorption peak, and can absorb natural light. Such a material may be selected from known dyestuffs in view of their physical properties. For example, it may be selected from compounds chemically similar to the materials for use in the recording layer, as a conventional practice.

The above light-absorptive material for absorbing light of undesired wavelengths is used to an amount for achieving its object. The layer containing the above material is usually 500 to 1500 A thick.

The optical memory medium of the invention may be prepared by using a well known method.

Referring now to the drawings, Fig. 1 shows a construction of an optical memory disc of one embodiment according to the invention. In this figure, 1a,1b denote transparent substrates; 2,2 denote recording layers; and 3 denotes a spacer. The recording layers 2,2 are formed to a thickness of approximately 600 A respectively on the substrates 1a,1b by spin-coating a solution of ethanol 100 wt% and an organic dyestuff material 2.5 wt% represented by the formula (i):

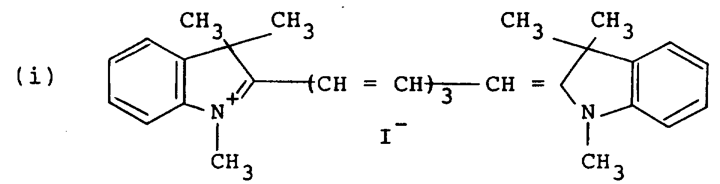

The recording layer 2 of the substrate 1a may be formed on the other side of the substrate 1a instead of being formed on the side of the substrate shown in Fig. 1.

The substrate 1a is made of a polycarbonate, and the other substrate 1b is made of a mixture of a polymethyl methacrylate (PMMA) and organic dyestuff materials (ii) and (iii) represented respectively by the formulae (ii) and (iii):

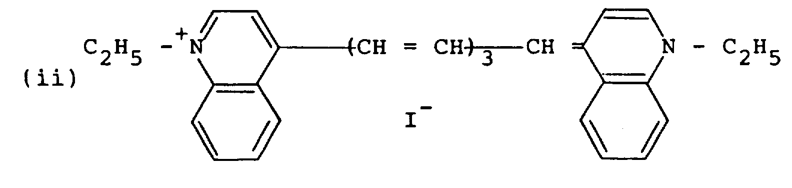

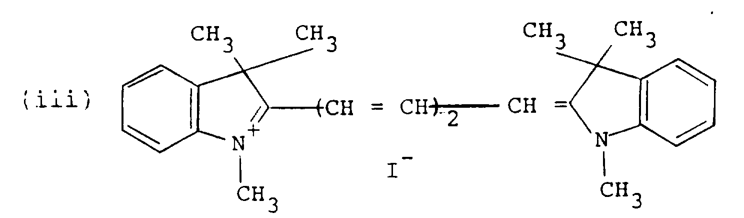

100 wt% of PMMA and 0.2-1.0 wt% of respective materials (ii) and (iii) are fused and mixed at approximately 200 °C, then injection molded to form the substrate 1b of approximately 1 mm thick and 30 cm in diameter.

It is to be noticed that, where a content of each of the materials (ii) and (iii) is less than 0.2 wt%, light absorptive property of the substrate 1b becomes unsatisfactory, in contrast where it is more than 1.0 wt%, compatibility of the materials (ii) and (iii) with PMMA becomes insufficient.

Also to be noticed that, since the decomposition temperatures of these dyestuff materials (ii) and (iii) are approximately 230 °C, and the melting point of PMMA is approximately 200 °C, fusion at 200 °C as described above does not decompose the dyestuff materials. However, if polycarbonate is used instead of PMMA, since the melting point of polycarbonate is approximately 250 °C, the dyestuff materials (ii) and (iii) may decompose when fused. Therefore, polycarbonate is not suitable for the substrate 1b.

Further, an aluminum reflecting layer 7 approximately 1500 A thick is formed over the recording layer by vacuum evaporation to prepare a reflecting-type memory disc.

Fig. 2 shows a spectral property (absorbance) of the organic dyestuff material (i). As shown in this figure, this organic dyestuff material exhibits a high absorbance with respect to light having a wavelength of approximately 780 nm. Therefore, where such a material is used for the recording layer, using a laser beam of 780 nm wavelength enables to perform high-quality recording.

Fig. 3 shows spectral properties (absorbance) of the dyestuff materials (ii) and (iii), respectively. As shown in this figure, the materials (ii) and (iii) exhibit little absorption with respect to light of approximately 780 nm wavelength.

The optical memory disc as constructed above was permitted to stand under natural light, then respective reflectance variations in accordance with standing time with respect to the substrate 1a side and the substrate 1b side were measured. The measurement was performed in such a manner that a feeble laser beam of 780 nm wavelength was applied to each substrate and its reflectance was measured.

Fig. 4 shows the result of this experiment. As can be understood from Fig. 4, the reflectance with respect to the substrate 1a side gradually decreases after about 10 hours has elapsed. In contrast, the reflectance with respect to the substrate 1b side does not vary even after 10000 hours has elapsed.

As seen above, according to the experiment, by incorporating the materials (ii) and (iii) in the substrate, reflectance decrease of the disc could be effectively prevented. It is inferred that such an effect was produced because the materials (ii) and (iii) incorporated in the substrate absorbed natural light before reaching the recording layer thereby to prevent oxidation of the recording layer caused by natural light.

It should be noted that beams having wavelengths of other than approximately 780 nm are absorbed by the substrate, resulting in unsuitableness for recording and reproducing information. Therefore, it is preferred to use a beam of approximately 780 nm wavelength for recording and reproducing information. In this case, a beam intensity should be changed depending upon whether it is for recording or reproducing.

Fig. 5 shows another embodiment of the invention. In this embodiment, a solution of the following composition is applied onto a glass substrate 5 using spin-coating technique, then subjected to natural drying to form a shading layer 6 of approximately 1 µm thick.
- solvent: methylethylketone 100 wt%
- resin: polyvinylbutyral 5 wt%
- dyestuff: material (ii) 1.5 wt%
- material (iii) 1.5 wt%

A substrate to be used here is required to be made of a material which cannot be melted by methylethylketone. Therefore, this embodiment uses a glass substrate.

Next, a solution of the following composition is spin coated over the shading layer 6, then subjected to natural drying to form a recording layer 4 approximately 600Å thick.
- solvent: ethanol 100 wt%
- dyestuff: material (i) 2.5 wt%

A reflective layer 8 is formed over the recording layer.

The above recording layer 4 may be formed on the other side of the substrate 5 instead of being formed over the shading layer 6. Further, as described in the former embodiment, an aluminium reflecting layer, approximately 1500Å thick is formed over the recording layer 4 by vacuum evaporation.

Like the former embodiment, the reflectance of this embodiment did not vary with time while standing for a long period of time under natural light. It is also inferred that such an effect was produced because the shading layer 6 containing the materials (ii) and (iii) absorbed natural light before it could reach the recording layer 4 thereby preventing oxidation of the recording layer 4 caused by natural light.

In the above embodiments, the materials (ii) and (iii) are selected so that light of 780 nm wavelength can reach the recording layer. However, when a beam to be used for recording and reproducing information is different from the above in wavelength, the materials to be incorporated in the substrate or shading layer should be appropriately selected to absorb light having wavelengths other than the beam wavelength. In this case too, for effective recording, the material to be incorporated in the recording layer should be selected from materials exhibiting absorption peak essentially identical to the wavelength of the beam for recording and reproducing information.

According to the optical memory medium of the invention, light having undesired wavelengths is absorbed by the shading means such as the shading layer or substrate before reaching the recording layer to prevent the recording layer from being oxidized by natural light, thereby protecting the optical memory medium from its deterioration with time.

## Claims

1. An optical memory medium for recording or reproducing information by applying a laser beam thereto, comprising:
a substrate (1a,1b,5);
an organic photochromic recording layer (2,4) on the substrate (1a,1b,5);
a reflective layer formed on the recording layer (2,4); and light-absorptive material (6) associated with the substrate (1a,1b,5) for protecting the recording layer (2,4),
wherein the light-absorptive material (6) comprises a combination of two organic dyes and has a peak in its transmissivity characteristic at a wavelength suitable for recording on and reproduction from the recording layer (2,4).

2. A recording medium according to claim 1, wherein the organic dyes comprise materials having the following formulae:

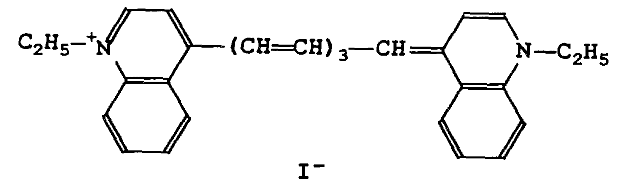

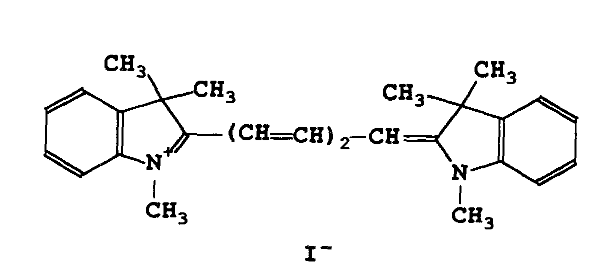

3. A recording medium according to claim 1 or 2, wherein the light-absorptive material is contained within the substrate (1a,1b).

4. A recording medium according to claim 1 or 2, wherein the light-absorptive material (6) is contained within a shading (6) layer on the substrate (5).

5. A recording medium according to any preceding claim, further comprising a spacer, a further reflective layer, a further recording layer (2) and a further substrate (1b) to provide a double-sided recording medium.

6. A recording medium according to any preceding claim, wherein the recording layer (2,4) comprises a material suitable for repeated rewriting of information.

## Patentansprüche

1. Optisches Speichermedium zum Aufzeichnen oder Reproduzieren von Information durch Anwenden eines Laserbündels auf dasselbe, umfassend:
ein Substrat (1a, 1b, 5);
eine organische photochrome Aufzeichnungsschicht (2, 4) auf dem Substrat (1a, 1b, 5);
eine auf der Aufzeichnungsschicht (2, 4) ausgebildete reflektierende Schicht; und
lichtabsorptives Material (6), das zum Schützen der Aufzeichnungsschicht (2, 4) dem Substrat (1a, 1b, 5) zugeordnet ist,
worin das lichtabsorptive Material (6) eine Kombination von zwei organischen Farbstoffen umfaßt bzw. enthält und eine Spitze bzw. ein Maximum in seiner Charakteristik der spezifischen Durchlässigkeit bei einer Wellenlänge hat, die zum Aufzeichnen auf und zur Reproduktion von der Aufzeichnungsschicht (2, 4) geeignet ist.

2. Aufzeichnungsmedium gemäß Anspruch 1, worin die organischen Farbstoffe Materialien umfassen bzw. enthalten, welche die folgenden Formeln haben:

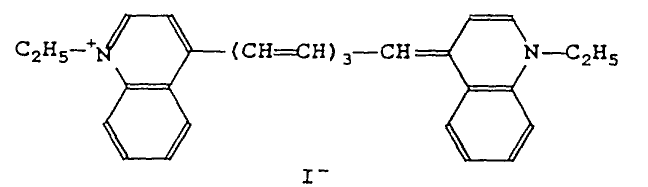

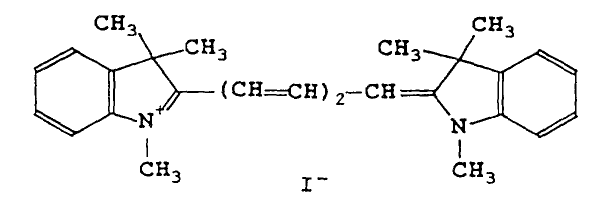

3. Aufzeichnungsmedium gemäß Anspruch 1 oder 2, worin das lichtabsorptive Material innerhalb des Substrats (1a, 1b) enthalten ist.

4. Aufzeichnungsmedium gemäß Anspruch 1 oder 2, worin das lichtabsorptive Material (6) innerhalb einer Tönungsschicht (6) auf dem Substrat (5) enthalten ist.

5. Aufzeichnungsmedium gemäß irgendeinem vorhergehenden Anspruch, weiter umfassend einen Abstandshalter, eine weitere reflektierende Schicht, eine weitere Aufzeichnungsschicht (2) und ein weiteres Substrat (1b), um ein doppelseitiges Aufzeichnungsmedium vorzusehen.

6. Aufzeichnungsmedium gemäß irgendeinem vorhergehenden Anspruch, worin die Aufzeichnungsschicht (2, 4) ein Material umfaßt bzw. enthält, das für wiederholtes Wiedereinschreiben von Information geeignet ist.

## Revendications

1. Milieu de mémorisation optique pour enregistrer ou reproduire des informations par application d'un faisceau laser audit milieu, comprenant :
un substrat (1a,1b,5) ;
une couche d'enregistrement organique photochrome (2,4) sur le substrat (1a,1b,5) ;
une couche réfléchissante formée sur la couche d'enregistrement (2,4) ; et
une matière d'absorption de lumière (6) associée au substrat (1a,1b,5) pour protéger la couche d'enregistrement (2,4) ;
dans lequel la matière d'absorption de lumière (6) comprend une combinaison de deux colorants organiques et présente un pic de sa caractéristique de transmissivité situé à une longueur d'onde appropriée pour l'enregistrement et la reproduction sur et à partir de la couche d'enregistrement (2,4).

2. Milieu d'enregistrement suivant la revendication 1, dans lequel les colorants organiques comprennent des matières ayant les formules suivantes :

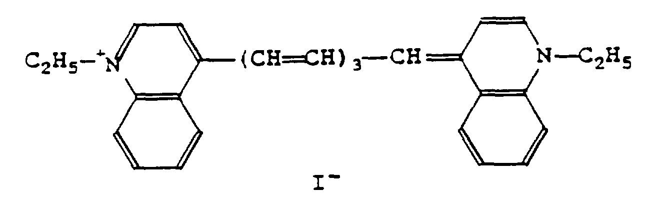

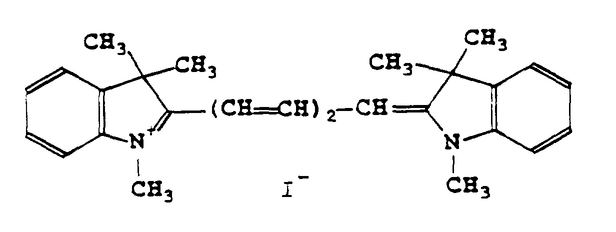

3. Milieu d'enregistrement suivant la revendication 1 ou 2, dans lequel la matière d'absorption de lumière est contenue dans le substrat (1a,1b).

4. Milieu d'enregistrement suivant la revendication 1 ou 2, dans lequel la matière d'absorption de lumière (6) est contenue dans une couche de protection (6) sur le substrat (5).

5. Milieu d'enregistrement suivant une quelconque des revendications précédentes, comprenant en outre un élément d'espacement, une autre couche réfléchissante, une autre couche d'enregistrement (2) et un autre substrat (1b) pour constituer un milieu d'enregistrement à double face.

6. Milieu d'enregistrement suivant une quelconque des revendications précédentes, dans lequel la couche d'enregistrement (2,4) comprend une matière convenant pour la réécriture répétée d'informations.
